# EUROPÄISCHE PATENTANMELDUNG

(11) **EP 0 822 365 A1**
(43) Veröffentlichungstag der Anmeldung: **04.02.1998**
(21) Anmeldenummer: 97111256.0
(22) Anmeldetag: 04.07.1997
(51) Int. Cl.: F16L 11/11

(54) **Schutzrohr für eine Versorgungsleitung, insbesondere für ein mindestens eine Kunststoffschicht aufwiesendes mediumführendes Rohr**

(30) Priorität: 01.08.1996 DE 19631041
(71) Anmelder: Hewing GmbH, D-48607 Ochtrup (DE)
(72) Erfinder: Riesselmann, Franz-Josef, 49393 Lohne (DE)
(74) Vertreter: Hilleringmann, Jochen, Dipl.-Ing.

(57) **Zusammenfassung**

Das Schutzrohr (10) für eine Versorgungsleitung, insbesondere für ein mindestens eine Kunststoffschicht aufweisendes mediumführendes Rohr, ist mit einer flexiblen Schutzhülle (16) versehen. Ferner weist das Schutzrohr mehrere voneinander beabstandete ringförmige Stützkörper (12) auf, die von der Schutzhülle (16) gehalten sind.

## Beschreibung

Die Erfindung betrifft ein Schutzrohr für eine Versorgungsleitung, insbesondere für ein mindestens eine Kunststoffschicht aufweisendes mediumführendes Rohr. Bei diesem Rohr handelt es sich entweder um ein vollständig aus Kunststoff bestehendes Rohr oder um ein Verbundrohr, das eine Kunststoff-Innenschicht, eine Metalleinlage und eine Kunststoff-Außenschicht aufweist.

Zum Schutz vor Versorgungsleitungen, beispielsweise elektrischen Kabeln oder medienführenden Rohren, wie beispielsweise Brauchwasser- oder Heizungsrohren aus insbesondere Kunststoff, sind diese Versorgungsleitungen mit Spiel durch ein Schutzrohr hindurchgeführt, das zumeist als Wellrohr aus Kunststoff ausgeführt ist und dem mechanischen Schutz der Versorgungsleitungen dient. Zumeist werden die Versorgungsleitungen vorkonfektioniert mit dem Schutzrohr an die Baustelle angeliefert. Auf der Baustelle muß dann dieses "Leitung/Rohr-In-Rohr-System" der benötigten Länge entsprechend abgelängt werden. Anschließend müssen die Enden der Versorgungsleitungen/mediumführenden Rohre freigelegt werden, was dadurch erfolgt, daß das Schutzrohr in den Endbereichen abgeschnitten wird. Dabei kann es leicht zu Beschädigungen der Versorgungsleitungen/mediumführenden Rohre kommen, was aus sicherheitstechnischen Gründen nachteilig ist und darüber hinaus den Montageaufwand erhöht.

Der Erfindung liegt die Aufgabe zugrunde, ein Schutzrohr für eine Versorgungsleitung, insbesondere für ein mindestens eine Kunststoffschicht aufweisendes mediumführendes Rohr zu schaffen, mit dem das Freilegen der Versorgungsleitungen/Rohre einfach und darüber hinaus ohne Beschädigungen erfolgt.

Zur Lösung dieser Aufgabe wird mit der Erfindung ein Schutzrohr vorgeschlagen, das versehen ist mit einer flexiblen Schutzhülle und mehreren ringförmigen Stützkörpern, die voneinander beabstandet sind und von der Schutzhülle gehalten sind.

Mit der Erfindung wird also ein längenveränderbares und insbesondere kompressibles Schutzrohr vorgeschlagen. Dieses Schutzrohr weist mehrere voneinander beabstandete ringförmige Stützkörper auf, durch die hindurch die Versorgungsleitungen/Rohre mit Spiel geführt werden können. Die ringförmigen Stützkörper sind von einer umgebenden Schutzhülle gehalten, die aus einem flexiblen Material besteht oder in anderer Weise flexibel aufgebaut ist. In denjenigen Bereichen, in denen benachbarte Stützkörper voneinander beabstandet sind, kann der Zwischenraum zwischen diesen Stützkörpern verändert werden, insbesondere verkleinert werden, da die diese Zwischenräume überbrückende Schutzhülle flexibel ist. Beim Verlegen von Versorgungsleitungen/Rohren, die durch Schutzrohre nach der Erfindung verlaufen, erfolgt beim Verlegen lediglich noch das Ablängen dieses Rohr-in-Rohr-Systems. Das Freilegen der Enden der Versorgungsleitungen/Rohre zum Anschließen derselben an Armaturen o.dgl. erfolgt auf einfache Weise dadurch, daß das Schutzrohr zurückgezogen wird, da das erfindungsgemäße Schutzrohr durch die voneinander beabstandete Stützkörper "stauchbar" ist.

Zweckmäßigerweise sind die Stützkörper in die Schutzhülle eingebettet, wobei die Stützkörper vollständig von Material der Schutzhülle umgeben sein können. Alternativ dazu kann die Schutzhülle von außen auf die Stützkörper aufgeschrumpft oder in sonstiger Weise aufgebracht sein, so daß die Stützkörper auf der Innenseite des erfindungsgemäßen Schutzrohres über die Innenwand der Schutzhülle überstehen.

Die Stützkörper können als geschlossene Ringe ausgebildet sein, die sich über 360° erstrecken. Zweckmäßig ist es, wenn diese Ringe einen rechteckigen Querschnitt aufweisen. Alternativ dazu können die Ringe auch ein glockenartiges Profil aufweisen; diese Stützkörperringe werden zweckmäßigerweise durch Schneiden von Wellrohren hergestellt, die nach dem Schneidvorgang auf Abstand gehalten von einer Schutzhülle umgeben werden, die mittels Vakuum aufgezogen wird und sich damit dem "Berg und Tal"-Verlauf der Stützkörper anpaßt.

Alternativ zu den obigen Ausführungsformen der Stützkörper ist es auch möglich, ein wendelförmiges Stützelement zu verwenden, bei dem die einzelnen Windungen/Gänge voneinander beabstandet sind. Diese einzelnen Windungen/Gänge stellen dann die Stützkörper dar, die bei dieser Ausführungsform untereinander verbunden sind, nichtsdestotrotz aber voneinander beabstandet sind.

Die Schutzhülle kann aus einer Folie oder einem Schaummaterial bestehen. Letzteres hat den Vorteil, daß das mediumführende Innenrohr thermisch isoliert ist.

Nachfolgend werden anhand der Figuren Ausführungsbeispiele der Erfindung näher erläutert. Im einzelnen zeigen:
- Fig. 1: einen Längsschnitt durch ein Schutzrohr gemäß einem ersten Ausführungsbeispiel mit Stützkörpern, die jeweils ein glockenartiges Profil aufweisen,
- Fig. 2: im Längsschnitt die Situation des Schutzrohres mit innenliegendem Kunststoffrohr gemäß Fig. 1 bei freigelegtem Innenrohrende durch Zurückziehen des Schutzrohres,
- Fig. 3: einen Längsschnitt durch ein zweites Ausführungsbeispiels eines Schutzrohres mit im Querschnitt rechteckigen Ringen als Stützkörper und
- Fig. 4: ein weiteres Ausführungsbeispiel eines Schutzrohres mit wendelartigem Stützelement als Stützkörper.

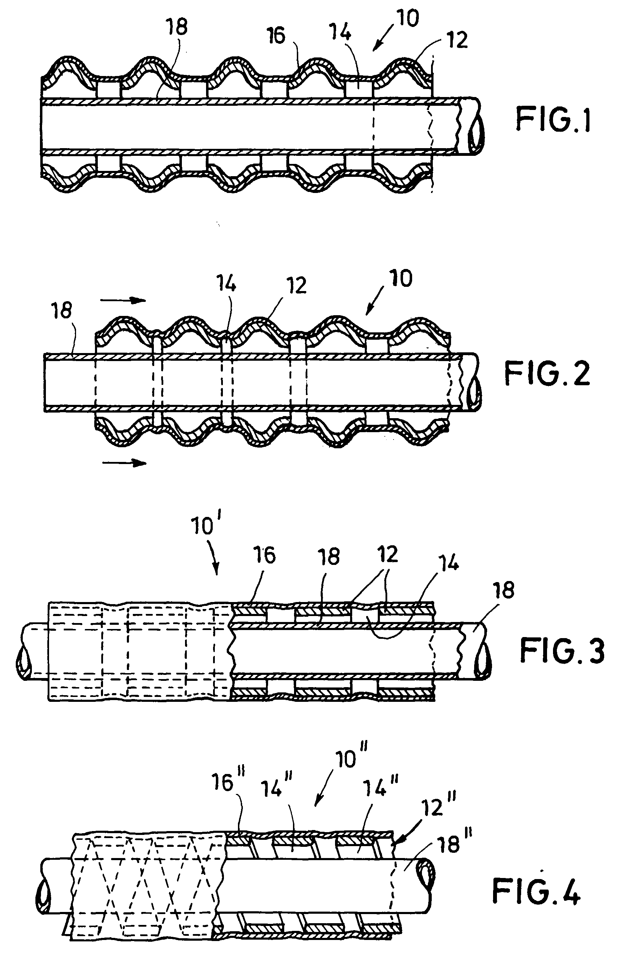

In den Fign. 1 und 2 ist jeweils im Längsschnitt ein erstes Ausführungsbeispiel eines Schutzrohres 10 gezeigt. Dieses Schutzrohr 10 hat eine wellrohrähnliche Gestalt und besteht aus einzelnen geschlossenen Kunststoff-Stützringen 12 mit glockenförmigem Profil, wobei die durch dieses Profil gebildete Erhebung radial nach außen weist. Mehrere derartige Stützringe 12 sind in axialer Erstreckung des Schutzrohres 10 aufeinanderfolgend und mit Abstand 14 untereinander angeordnet. Von außen auf die Stützringe 12 ist eine flexible Kunststoff-Schutzhülle 16 aufgezogen, in der die Stützringe 12 gehalten sind, da die Schutzhülle 16 die Stützringe 12 eng anliegend umgibt und damit deren Profil folgt. Durch das Schutzrohr 10 hindurch erstreckt sich mit radialem Spiel ein Kunststoffrohr 18, bei dem es sich beispielsweise um ein Brauchwasser- oder ein Heizungsrohr handelt.

Zum Freilegen eines Endes des Kunststoffrohres 18 braucht das Schutzrohr 10 lediglich gemäß Fig. 2 vom freizulegenden Ende weggezogen zu werden; ein Abschneiden des Schutzrohres 10 zwecks Freilegung eines Endes des Kunststoffrohres 18 ist also nicht mehr erforderlich. In Fig. 2 ist zu erkennen, wie sich beim Zurückziehen des Schutzrohres 10 die Abstände 14 der dem Ende des Schutzrohres 10 benachbarten Stützringe 12 verändert. Damit ist eine Gefahrenquelle bei der Montage von in Schutzrohren verlaufenden wasserführenden Kunststoffrohren/Verbundrohren vermieden, die dadurch gegeben war, daß beim Abschneiden des Schutzrohres 10 das innenliegende Kunststoffrohr 18 beschädigt werden konnte. Dieser Vorteil wird unter Aufrechterhaltung der mechanischen Schutzfunktion des Schutzrohres 10 erzielt; denn das Schutzrohr 10 schützt wie jedes andere im Stand der Technik bekannte Schutz-Wellrohr, das nicht stauchbar ist, das innenliegende Kunststoffrohr 18 vor mechanischen Beschädigungen.

Ein weiteres Beispiel für ein Schutzrohr 10' ist in Fig. 3 im Längsschnitt gezeigt. In Fig. 3 sind diejenigen Teile, die funktionsgleich den Teilen des Schutzrohres 10 gemäß den Fign. 1 und 2 sind, mit den gleichen Bezugszeichen gekennzeichnet. Der Unterschied der Schutzrohre 10 und 10' besteht darin, daß die Stützringe 12 des Schutzrohres 10' einen rechteckigen Querschnitt ohne Erhebung auf der Außen-/Innenseite aufweisen, insofern also eine glatte Außenseite aufweisen. Die Funktionsweise des Schutzrohres 10' ist identisch der des Schutzrohres 10.

In Fig. 4 ist im Längsschnitt ein drittes Ausführungsbeispiel eines Schutzrohres 10'' dargestellt. Dieses Schutzrohr 10'' weist eine Kunststoff-Stützwendel 12'' auf, die eine Vielzahl von voneinander beabstandeten Wickelungen 14'' aufweist. Diese Stützwendel 12'' ist von einer flexiblen Schutzhülle 16'' umgeben. Durch die Stützwendel 12'' erstreckt sich ein beispielsweise wasserführendes Kunststoffrohr 18''. Die Schutzhülle 16'' hält die einzelnen Windungen 14'' der Stützwendel 12'' auf Abstand und ist insofern flexibel, als durch Zurückziehen der Schutzhülle 16'' sich der Abstand der Wendeln 14'' verkleinert, so daß das innenliegende Kunststoffrohr 18'' freigelegt wird.

## Patentansprüche

1. Schutzrohr für eine Versorgungsleitung, insbesondere für ein mindestens eine Kunststoffschicht aufweisendes mediumführendes Rohr, mit
- einer flexiblen Schutzhülle (16;16'') und
- mehreren voneinander beabstandeten ringförmigen Stützkörpern (12;12''), die von der Schutzhülle (16;16'') gehalten sind.

2. Schutzrohr nach Anspruch 1, dadurch gekennzeichnet, daß die Stützkörper (12;12'') in die Schutzhülle (16; 16'') eingebettet sind.

3. Schutzrohr nach Anspruch 1, dadurch gekennzeichnet, daß die Stützkörper (12;12'') von außen von der Schutzhülle (16;16'') umschlossen sind.

4. Schutzrohr nach einem der Ansprüche 1 bis 3, dadurch gekennzeichnet, daß die Stützkörper (12) als einzelne Ringe mit einem rechteckigen Profil ausgebildet sind.

5. Schutzrohr nach einem der Ansprüche 1 bis 3, dadurch gekennzeichnet, daß die Stützkörper (12) als einzelne Ringe mit einem glockenartigen Profil ausgebildet sind.

6. Schutzrohr nach einem der Ansprüche 1 bis 3, dadurch gekennzeichnet, daß die Stützkörper die Windungen (14'') eines wendelförmigen Stützelements (12'') sind.

7. Schutzrohr nach einem der Ansprüche 1 bis 6, dadurch gekennzeichnet, daß die Schutzhülle (16;16'') eine Kunststoff-Folie ist.

8. Schutzrohr nach einem der Ansprüche 1 bis 7, dadurch gekennzeichnet, daß die Schutzhülle (16;16'') aus Schaummaterial besteht.
